**Europäisches Patentamt**

**European Patent Office**

**Office européen des brevets**

(19)

(11) Veröffentlichungsnummer: **0 060 323
B1**

(12)

# EUROPÄISCHE PATENTSCHRIFT

(45) Veröffentlichungstag der Patentschrift:
**11.05.88**

(51) Int. Cl.⁴: **G 01 S 13/52**

(21) Anmeldenummer: **81108711.3**

(22) Anmeldetag: **22.10.81**

(54) Puls-Doppler-Radargerät mit veränderbarer Pulsfolgefrequenz.

(30) Priorität: **17.03.81 DE 3110279**

(43) Veröffentlichungstag der Anmeldung:
**22.09.82 Patentblatt 82/38**

(45) Bekanntmachung des Hinweises auf die Patenterteilung:
**11.05.88 Patentblatt 88/19**

(84) Benannte Vertragsstaaten:
**BE FR GB IT NL**

(56) Entgegenhaltungen:
**DE - A - 2 540 584
DE - B - 2 022 234
DE - B - 2 217 041
DE - B - 2 318 976
US - A - 3 491 360**

**Skolnik: "Radar Handbook", McGraw-Hill, 1967**

(73) Patentinhaber: **Siemens Aktiengesellschaft Berlin und München, Wittelsbacherplatz 2, D-8000 München 2 (DE)**

(72) Erfinder: **Gstöttner, German, Dipl.-Ing., Kaltenbrunner Strasse 11, D-8000 München 71 (DE)**

**Beschreibung**

Die Erfindung bezieht sich auf ein Puls-Doppler-Radargerät gemäss dem Oberbegriff des Patentanspruchs 1.

Radargeräte mit fester Pulsfolgefrequenz verarbeiten neben den Bewegt- und Festzielen aus der eindeutigen Reichweite, die durch die Pulsfolgefrequenz bestimmt ist, auch unerwünschte Zielechos aus den Überreichweiten. Dabei können je nach Systemdaten des Radargerätes Echos aus mehreren Überreichweiten entdeckt werden.

Ein Radargerät der eingangs genannten Art ist aus dem «Radar Handbook» von Skolnik, Migraw-Hill 1967, Seiten 19-12 bis 19-14 bekannt. Hierbei erfolgt zur Überreichweitenunterdrückung eine Umschaltung der Pulsfolgefrequenz während der Zielbeleuchtungsdauer. Zur Unterdrückung von Störzeichen bei der Umschaltung der Pulsfolgefrequenz wird das durch ein Bewegtzeichen-Dopplerfilter gefilterte Videosignal ausgetastet.

Zur Erkennung von Bewegtzielechos aus Überreichweiten ist es bekannt, einen Wechsel der Pulsfolgefrequenz vorzunehmen (Skolnik «Introduction to Radar Systems», Migraw-Hill 1962, Seite 57). Danach kann die Umschaltung der Pulsfolgefrequenz nach jedem Antennenumlauf oder von Puls zu Puls erfolgen. Durch den Wechsel der Pulsfolgefrequenz treffen Bewegtzielechos aus Überreichweiten zu verschiedenen Zeiten am Radarempfänger ein und können auf dem Radarbildschirm als Überreichweiten-Echos erkannt werden, da sie von Radarperiode zu Radarperiode mit stark verschiedenen Entfernungen angezeigt werden.

Bei Puls-Doppler-Radargeräten mit Festzeichenunterdrückung (Clutterunterdrückung) durch ein Dopplerfilter hat die periodische Umschaltung der Pulsfolgefrequenz zur Folge, dass die Unterdrückung von Festzeichenechos aus den Überreichweiten verschlechtert ist. Während Festzielechos aus der eindeutigen Reichweite bei verschiedenen Pulsfolgefrequenzen unverändert in das gleiche Entfernungselement treffen, fallen die Festziele aus den Überreichweiten nach dem Umschaltzeitpunkt in andere Entfernungselemente, so dass sich in der Regel die Festzielamplitude in jedem Entfernungselement ändert. Während des Einschwingvorganges des Dopplerfilters nach einer Pulsfolgefrequenz-Änderung ist vorübergehend das Kriterium (konstante Amplitude) für die Unterdrückung von Festzeichen im Dopplerfilter entfallen. Das sich in der Amplitude ändernde Festzielsignal ist von einem Bewegtzielechosignal nicht mehr zu unterscheiden und wird vom Dopplerfilter nur noch teilweise unterdrückt.

Es ist bereits bekannt, sowie aus dem og. «Radar Handbook» als auch aus DE-B-2 022 234, die bei der Umschaltung der Impulswiederholfrequenz entstehenden Frequenzkomponenten, die in den Durchlassbereich des Dopplerfilters fallen, während des gestörten Zeitraumes durch ein Signal zu ersetzen, das dopplerfrequenzfrei ist und dessen Amplitude auch gleich Null sein kann.

Der Erfindung liegt die Aufgabe zugrunde, bei einem Puls-Doppler-Radargerät der eingangs genannten Art eine Verschlechterung der Festzeichenunterdrückung bei Überreichweitenempfang mit relativ geringem Aufwand zu verhindern.

Die Aufgabe wird gemäss der Erfindung durch die im Kennzeichen des Patentanspruchs 1 angegebenen Merkmale gelöst.

Eine vorteilhafte Weiterbildung ist im Unteranspruch angegeben.

Die Erfindung und weitere Einzelheiten der Erfindung werden anhand der Figuren 1 bis 5 näher erläutert.

Es zeigen

Fig. 1 ein vereinfachtes Prinzipschaltbild eines Puls-Doppler-Radargerätes,

Fig. 2 ein vereinfachtes Prinzipschaltbild eines digitalen Bewegtzeichenfilters,

Fig, 3 die Amplituden von Festzeichenechos eines Entfernungselementes am Ein- und Ausgang des Doppel-Cancelers des Digitalfilters,

Fig. 4 eine Darstellung des Frequenzwechsels zwischen zwei Pulsfolgefrequenzen während einer Zielbeleuchtungsdauer,

Fig. 5 die Anzeige von Bewegtzielen aus Überreichweiten auf einem Radarbildschirm.

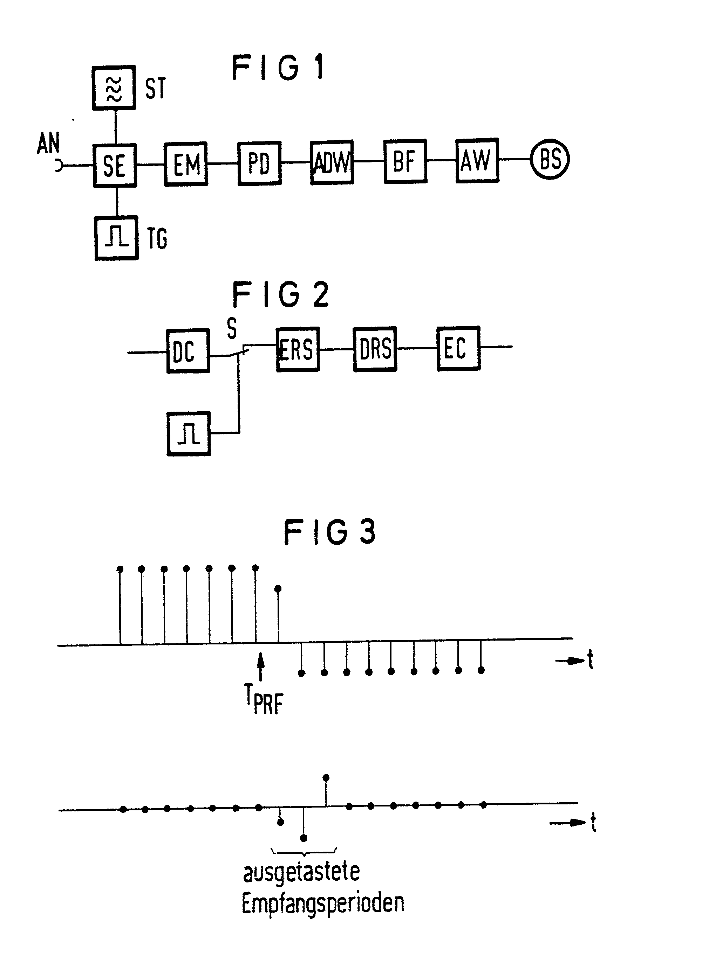

Das Radargerät nach Fig 1 weist eine rotierende oder in einem Sektorbereich geschwenkte Antenne AN, einen Sende-Empfangs-Schalter SE, einen Sendeteil ST und einen Ampfangsteil EM auf. Dem Sendeteil ST und dem Empfangsteil EM ist ein gemeinsamer Taktgeber TG zugeordnet, durch den wenigstens zwei umschaltbare Impulsfolgefrequenzen bestimmt werden. Der Empfangsteil EM enthält insbesondere Mischstufen und Verstärker. An den Empfänger EM schliesst sich ein Phasendetektor PD, ein Analog-Digitalwandler ADW und ein Bewegtzeichenfilter BF an. Das Bewegtzeichenfilter BF dient der Unterdrückung von Festzielechosignalen und ist als ein aus Speicherelementen bestehendes Digitalfilter aufgebaut. Das Digitalfilter ist mehrstufig ausgebildet und besteht aus einem Canceler, einem Doppel-Canceler und aus einem rekursiven Filter höherer Ordnung.

Für die weitere Auswertung der Empfangssignale sind in bekannter Weise verschiedene Schaltungsteile, wie Gleichrichter, Nachintegrationsfilter und Schwellenschaltungen vorgesehen, die durch die Auswerteschaltung AW angedeutet sind. Die Darstellung oder Auswertung der Radarinformationen erfolgt beispielsweise mittels eines Schirmbildes BS.

Die periodische Umschaltung der Pulsfolgefrequenz dient der Erkennung von Bewegtzielechos aus einer oder mehreren Überreichweiten, um eine falsche Auswertung der Echosignale aus Überreichweiten zu verhindern. Die Änderung der Pulsfolgefrequenz erfolgt durch nicht näher dargestellte Umschalteinrichtungen im Taktgeber TG. Jede Umschaltung der Pulsfolgefrequenz führt in den einzelnen Stufen des Bewegtzeichenfilters zu mehr oder weniger grossen Einschwingvorgängen, die Änderungen in der Amplitude von Festzielechos zur Folge haben. Während der Einschwingzeit der Filter ist daher die Festzeichenunterdrückung gestört. Zur Unterdrückung dieser
Festzielechos ist daher gemäss der Erfindung im
Bewegtzeichenfilter ein gesteuerter Schalter vorgesehen, der nach jedem Wechsel der Pulsfolgefrequenz das Ausgangssignal des Cancelers bzw.
des Doppel-Cancelers für eine bestimmte Anzahl
von Radarperioden austastet. Während der Austastzeit stellen sich die entsprechenden Teile des
Bewegtzeichenfilters auf die neue Pulsfolgefrequenz ein, so dass nach der Einschwingzeit die
Festzielechos wieder unterdrückt werden. Die Anzahl der auszutastenden Empfangsperioden
hängt von der Überreichweitensituation, und von
der Lage des Austastschalter ab. Werden nur die
Echosignale der ersten Überreichweite berücksichtigt, so ändert sich die Echoamplitude nach
dem Umschaltzeitpunkt während einer Radarperiode. Sind noch Echosignale aus der zweiten
Überreichweite vorhanden, so ändert sich die
Echoamplitude während zweier Empfangsperioden usw. Dementsprechend müssen nach einem
Canceler eine bzw. zwei Radarperioden ausgetastet werden. Bei Austastung nach einem Doppel-
Canceler ist für den Einschwingvorgang des Doppel-Cancelers selbst eine zusätzliche Radarperiode auszutasten.

In Fig. 2 ist ein rekursives Filter dritter Ordnung
in Mitra-Struktur dargestellt. Das Bewegtzeichenfilter besteht der Reihe nach aus einem Doppel-
Canceler DC, einer einfach rekursiven Stufe ERS,
einer doppelt rekursiven Stufe DRS und einem
Einfach-Canceler EC. Ein gesteuerter Schalter S
für die Austastung ist am Ausgang des Doppel-
Cancelers DC angeordnet. Werden Festzielechos
nur aus der ersten Überreichweite eines Radargerätes erwartet, so müssen zwei Radarperioden
ausgetastet werden, für Festziele aus der ersten
und zweiten Überreichweite drei Radarperioden
und für Festzielechos aus der ersten, zweiten und
dritten Überreichweite vier Radarperioden. Für
viele Anwendungsfälle genügt jedoch die Austastung von drei Radarperioden. Der Einschwingvorgang des Doppel-Cancelers DC unter Berücksichtigung von Echos aus der ersten und zweiten
Überreichweite des Radargerätes ist in Fig. 3 dargestellt. Im oberen Teil dieser Figur sind die Festzeichen-Echoamplituden eines Entfernungselementes am Eingang des Doppel-Cancelers in Abhängigkeit von der Zeit dargestellt. Vor der Änderung der Pulsfolgefrequenz zum Zeitpunkt $T_{PRF}$
und von einer bestimmten Zeit an nach der Umschaltung der Pulsfolgefrequenz weisen die Amplituden der Festzeichenechos konstante Werte
auf. Die abweichenden Amplitudenwerte kennzeichnen den Einschwingvorgang. Im unteren Teil
der Fig. 3 sind die den oben angegebenen Amplitudenwerten entsprechenden Signale am Ausgang des Doppel-Cancelers aufgetragen. Solange
der Amplitudenwert der Festzeichenechos vor
und nach dem Wechsel der Pulsfolgefrequenz
konstant ist, führt der Ausgang entsprechend der
angestrebten Wirkung eines Bewegtzeichenfilters
kein Signal. Die während des Einschwingvorganges auftretenden veränderten Amplitudenwerte der Festzeichenechos führen auch am Ausgang
des Doppel-Cancelers zu Signalwerten, die ein
Bewegtziel vortäuschen. Durch den gesteuerten
Schalter S am Ausgang des Doppel-Cancelers
werden die in drei Radarperioden auftretenden
Signale ausgetastet.

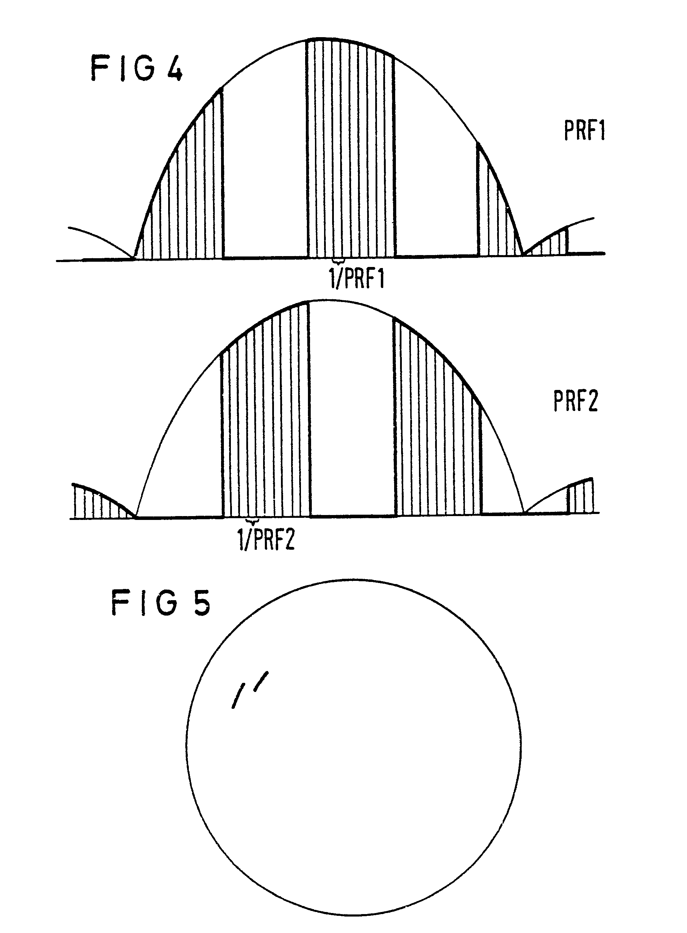

Wie bereits dargelegt, wird der Wechsel der
Pulsfolgefrequenz zur Erkennung von Bewegtzielen, die aus Überreichweiten des Radargerätes
stammen, angewandt. Durch eine Änderung der
Pulsfolgefrequenz erfolgt eine Verteilung der
Echoenergie auf verschiedene Entfernungselemente. In Fig. 4 sind die Echoamplituden am Ausgang eines digitalen Filters gezeigt, wobei während einer Zielbeleuchtungsdauer zwei Pulsfolgefrequenzen mehrfach geschaltet werden. Im
oberen Teil der Figur ist die Zielbeleuchtungsdauer eines Entfernungselementes bei der Pulsfolgefrequenz (PRF)1 und im unteren Teil die Zielbeleuchtungsdauer eines anderen Entfernungselementes bei der Pulsfolgefrequenz (PRF)2 dargestellt. Die Differenz der aufeinanderfolgend gesendeten Pulsfolgefrequenzen ist so gewählt, dass
das durch die Pulsfolgefrequenzänderung zerteilte Echosignal eines Bewegtzieles aus einer Überreichweite gerade kein gemeinsames Entfernungselement belegt. Die Anzeige eines Bewegtzieles aus einer Überreichweite auf einem Bildschirm ist in Fig. 5 angedeutet. Der Wechsel der
Pulsfolgefrequenz während einer Zielbeleuchtungsdauer ist nicht auf zwei Frequenzen beschränkt.

Die besonderen Vorteile der beschriebenen erfindungsgemässen Anordnung bestehen darin,
dass sich die Austastung im Bewegtzeichenfilter
durch den gesteuerten Schalter S auf eine nur
geringe Anzahl von Radarperioden beschränkt.
Die Verringerung der Entdeckungswahrscheinlichkeit von Bewegtzielen, die durch den möglichen Ausfall von Bewegtzielechos während der
Austastzeit bedingt sein kann, ist daher in den
meisten Fällen ohne Bedeutung. Die Abnahme der
Entdeckungswahrscheinlichkeit ist ausserdem um
so geringer, je höher die Anzahl der Hits pro Ziel
und je kleiner die Anzahl der Frequenzwechsel
der Pulsfolgefrequenz angesetzt sind.

**Patentansprüche**

1. Puls-Doppler-Radargerät mit einer Einrichtung zur Umschaltung der Pulsfolgefrequenz, mit
einem Bewegtzeichen-Dopplerfilter (BF) mit einer
von der Pulsfolgefrequenz unabhängigen Filtercharakteristik, und mit einem Schalter zur Austastung der gefilterten Videosignale nach jeder Umschaltung der Pulsfolgefrequenz, wobei diese Umschaltung und damit die Austastung der Videosignale mehrfach während der Zielbeleuchtungsdauer erfolgt, dadurch gekennzeichnet, dass das
digital ausgebildete Bewegtzeichen-Dopplerfilter
(BF) aus mehreren Filterstufen aufgebaut ist, dass
die erste Filterstufe ein Doppel-Canceler ist, und
dass der Schalter unmittelbar nach diesem Doppel-Canceler angeordnet ist.

2. Puls-Doppler-Radargerät nach Anspruch 1,
dadurch gekennzeichnet, dass die Differenz der aufeinanderfolgend gesendeten Pulsfolgefrequenzen derart gewählt ist, dass das Echosignal eines Bewegtzieles aus einer Überreichweite durch die Umschaltung auf gerade noch getrennte Entfernungselemente aufgeteilt wird.

## Claims

1. A pulse Doppler radar device comprising a device for switching-over the pulse repetition frequency, having a moving target echo Doppler filter (BF) whose filter characteristic is independent of the pulse repetition frequency and a switch for blanking filtered video signals following each switch-over of the pulse repetition frequency, whereby this switch-over, and thus the blanking of the video-signals, takes place several times during the target illumination period, characterised in that the digital moving target echo Doppler filter (BF) consists of a plurality of filter stages, that the first filter stage is a double canceller, and that the switch is arranged directly following this double canceller.

2. A pulse Doppler radar device as claimed in Claim 1, characterised in that the difference between consecutively transmitted pulse repetition frequencies is selected such that as a result of the switch-over the echo signal of a moving target from a range beyond the horizon is split between still separate range elements.

## Revendications

1. Appareil radar Doppler à impulsions comportant un dispositif servant à commuter la fréquence de récurrence des impulsions, un filtre Doppler (BF) de détection des échos de cibles mobiles, possédant une caractéristique de filtre indépendante de la fréquence de récurrence des impulsions, et un interrupteur servant à éliminer les signaux vidéo filtrés après chaque commutation de la fréquence de récurrence des impulsions, cette commutation et par conséquent la suppression des signaux vidéo s'effectuant d'une manière multiple pendant la durée d'irradiation de la cible, caractérisé par le fait que le filtre Doppler (BF) de détection des échos de cibles mobiles, réalisé sous forme numérique, est constitué par plusieurs étages de filtrage, que le premier étage de filtrage est formé par un suppresseur Doppler et que l'interrupteur est monté directement en aval de ce suppresseur Doppler.

2. Appareil radar Doppler à impulsions suivant la revendication 1, caractérisé par le fait que la différence des fréquences de récurrence des impulsions, qui sont émises successivement, est choisie de manière que le signal d'écho d'une cible mobile provenant d'une zone de surdépassement, est réparti par commutation entre des éléments de distance précisément encore séparés.

# FIG 1

# FIG 2

# FIG 3

ausgetastete
Empfangsperioden

FIG 4

PRF1

1/PRF1

PRF2

1/PRF2

FIG 5